# EUROPEAN PATENT APPLICATION

(11) **EP 1 385 127 A1**
(43) Date of publication of application: **28.01.2004**
(21) Application number: 03077281.8
(22) Date of filing: 15.07.2003
(51) Int. Cl.: G07B 15/04, G08G 1/14, G06F 17/60

(54) **Via internet website operated flexible admission and parking system for building complexes**

(30) Priority: 25.07.2002 NL 1021154
(71) Applicant: Van Esch, Gerardus Hendricus Maria, 5051 TG Goirle (NL)
(72) Inventor: Van Esch, Gerardus Hendricus Maria, 5051 TG Goirle (NL)

(57) **Abstract**

The invention relates to a device constructed as admission control and parking management system (1) for marked out building complexes, consisting of hardware and software coupled to entrance and exit facilities (8, 9) with pillars and barrier gates provided with check-in and check-out equipment, in which the software system is coupled to a website on the internet (39), in which personnel and employees are provided with a proximity-card (19) and visitors can get a barcode ticket (20) at the check-in equipment, in which admission and parking information is stored via internet (39) on the web server (33) with access database web.mdb (34) and are at certain times or can currently be downloaded to the site server (35) with access database site.mdb (36), through which the latest information about available parking spaces and the presence of people inside or outside the building can be seen constantly on the computer monitor.

## Description

The present invention relates to a device constructed as a hardware and software system for flexible management of admission controls and parking spaces of a marked out building complex, which can contain several companies and/or residences with several parking spaces, in which each employee, (visitor) or resident can have several parking spaces, in which the mentioned parking spaces and/or car parks are mostly meant for private cars, vans and such.

In practice, parking management and admission control systems are only known separately and in all kinds of variations.

It is the aim of a parking management system to manage the parking space, which can occur at either complex and/or parking level. Functioning of the parking management system can be described as follows: One identifies oneself, after which the systems starts checking a number of items. First of all whether the visitor is known and if any rights are given to this person and further the system checks if there are any spaces available in the group for which the rights are given. Depending on the results admission is given or not.

An admission control system has the function to control the admission to persons and/or users of the building complex. Herewith one identifies oneself to the system, after which the system starts investigating which rights have been given by the responsible authority. Depending on the results admission is given or not.

As already mentioned both systems work separately which gives many disadvantages, especially for building complexes in which several companies or institutions and/or residences are established for a totally controlled admission and parking. A building complex can have several car parks which in turn can be used by different companies, institutions or persons. There is also a need to assign certain priorities to mostly a small quantity of parking spaces, depending on the function or the momentary importance of a visiting person or employee for a certain company or institution. In short, people wish or can divide the available parking spaces in a number of levels. Besides, the building manager wishes to have a current overview of the parking spaces in the building complex and the visitors and the presence of people with the different companies.

Furthermore it appears that the admission control systems are coupled to a burglar or fire alarm system, which in turn are coupled to an emergency centre. Insurers and other institutes demand specific requirements with regard to the systems. All in all, after thorough analysis of the market of parking management systems and admission control systems it seems that, as mentioned above, the coupling of the separate systems gives many disadvantages.

In addition, the manager(s) and users must currently, in a very flexible way, have detailed insight in the state of affairs concerning parking possibilities and the stay (coming and leaving) of people of the different companies and institutes.

It is the object of the present invention to provide such a flexible combined and separate operating admission control and parking management system for building complexes, which do not have the aforementioned disadvantages and of which the working is very users' friendly and efficient, while the whole system can still be delivered in a very economical way.

For this a device constructed as admission control and parking management system for building complexes is developed in a very inventive way, characterized in that, the mentioned flexible controlling and managing of the admission to the mentioned building complex with separated parking spaces is executed via a software system coupled to a web server with a website on the internet and is in short indicated as admission control and parking management system and which work completely autonomous, in which the mentioned local admission to in the building complex is equipped with a pillar and barrier gate provided with registration equipment coupled to the mentioned software system for identification of the person with vehicle, in which it usually concerns personnel or employees and visitors, in which the management of the parking spaces and building admission is very specific and selective, in which mentioned personnel or employees identify themselves via an admission control card with chip or called a proximity-card and visitors can take a barcode ticket from the pillar after announcement for a once-only admission to a specifically appointed parking space and building floor, in which after working hours and/or visit the persons with their vehicles check-out via proximity-card or barcode ticket at the exit with pillar and barrier gate provided with check-out equipment, in which all settings for the admission policy and mutations during use is done by software via the internet web server, in which information from the web server for the concerned management system can be downloaded constantly to a locally set-up site server for locally, meaning decentralized, visualizing the last state of affairs of the system, in which dimensions and capacity of the hardware and software of the mentioned admission control and parking management system is adjustable to the dimensions of and the required possibilities for simultaneously controlling and managing several building complexes.

The advantage is that a very efficient overall working admission control and parking management system is obtained.

Then the device according to the present invention is further developed in such a way, that the mentioned website on the internet contains an active page with a central database with all the information of the building complexes and that mentioned website on the internet is accessible via http://namecomplex.parkeerbeheer.nl with a password to which certain privileges are coupled.

The advantage is that the party concerned can have efficient access to the system.

Further the device according to the present invention is further developed in such a way, that every building complex can have several car parks or parking spaces, which in turn can be used by several institutes or companies, in which each institute or company can divide the (rented) spaces available to them into levels, in which all users can manage their own available parking spaces via an internet site and can assign and/or take away users' rights.

The advantage is that the users or employees of a company or institution can manage the parking spaces and the admission to their company or institute in a very efficient way.

Furthermore the device according to the invention is further developed in such a way, that the mentioned parking management system updates the number of occupied and free parking spaces and the immediate mutations and further the system updates all actions and events in a so called "logfile" which logfile can be consulted from the internet in order to analyse the present use of the installation.

The advantage is that all actions and events can be scrolled over the computer screen and this is especially of importance for the manager.

Then the device according to the invention is further developed in such a way, that the mentioned group of employees is divided in employees without parking rights, which have a proximity-card adjusted only for the admission control system of the specific building, employees with parking rights, which have a proximity-card up to the, by their company reserved number of parking spaces in a determined car park, when the number of reserved spaces are not occupied, VIP's, in which this category has fixed parking spaces and always have admission and these spaces cannot be used by others, visitors, which normally have no admission and can only get this by identifying themselves to one of the companies via the intercom at the visitors entrance, regular services, which visit the complex regularly, for example postmen, the refuse collection service and such, this group receives an admission pass from the building manager, incidental services, which visit the building complex without any regularity, such as courier services, suppliers and such and will be seen by the system as brief visitors without parking rights with admission to the complex within a pre-set time limit (for example 15 minutes), emergency services such as the fire brigade, ambulance, which in case of calamities must have fast admission to the complex, and identify themselves via the intercom or drive open the barrier gates, in which every reception has an emergency button for opening all barrier gates of all entrances and exits of the complex to which that reception belongs, building manager, which authority is responsible for the daily management of the parking installation, in which this authority is always available for the users of the installation and can be taken over after office hours by a services department.

The advantage is a very efficient and necessary management of the system for admission control and parking management.

Further the device according to the invention is further developed in such a way, that by choosing operation via the internet via a standard web browser an employee can, through users' identification and password get access to the information applicable to him or her and can change, remove or add the following information:
- pass number
- name of pass holder
- parking type (level)
- free classification of the number of reserved parking spaces over the different levels,
in which the manager can also assign buildings to companies, can adjust the quantity of rented parking spaces per company, can add, remove, adjust companies and such, in which the data is kept on a web server, in which once every pre-set time the data is automatically downloaded to the site server (for example at 12.00 and 00.00 hrs.).

The advantage is much clarity in the use of the admission control and parking management system for the individual user.

Then the device according to the invention is further developed in such a way that, the web server has the following characteristics:
- The web server can be used for managing 10.000 passes for 200 companies. These companies can be spread over several locations (Multi Site).
- Mutations on the web server are periodically downloaded to the site server.
- Synchronisation with the web server can be done every hour.
- The web server and the site server are protected by a username and password.
- Several companies can log in on the web server at the same time.
- The complex manager has the authority to mutate not only the passes, but also the number of parking spaces per company.
- The username and password are first being stored by ISADIN in order to guarantee a good protection. A list with usernames and passwords are put at the complex managers' disposal.
And that the site server has the following characteristics:
- Per local parking management system 2000 passes divided over 25 companies can be applied.
- Per company 10 levels of admission groups can be adjusted.
- Per company one can choose for parking on all levels from a certain hour.
- Per site one can choose for Anti-passback or nightly reset.
- Admission control is done by means of an HID RS232 reader, barcode system or intercom.
- In case of a bus failure or breakdown of the site server the system switches over to the "stand alone" mode. In this position all passes with a valid facility code have access. Visitors can receive a service barcode card by pressing the service button at the intercom.
- The system offers potential free contacts for: roller almost empty, failure, emergency exit and such.
- On the Site server log data is kept of pass usage (who, where, when, access, no access + reason), the use of the emergency button (who, when) and the status of the system. The manager of the web server can request these data.

The advantages are a large capacity and flexibility of the admission control and parking management system for building complexes.

The preferred construction of the invention will be described by way of example, and with reference to the accompanying drawing. In which:
- Fig. 1: shows an overview of the admission control and parking management system according to a preferred embodiment of the invention;
- Fig. 2: shows a block diagram of the working or the use of the proximity card and the barcode ticket of the admission control and parking management system of figure 1;
- Fig. 3: shows a block diagram of the parking management system as a part of the total system according to the invention;
- Fig. 4: shows a flowchart (Program Structure Diagram) of the system of the handling near the entrance of the building complex;

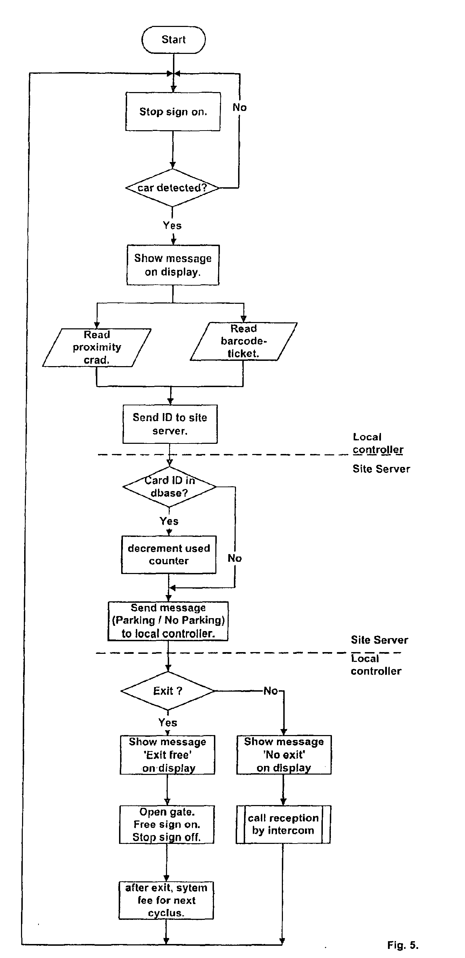

- Fig. 5: shows a flowchart of the handling of the system near the exit of the building complex;

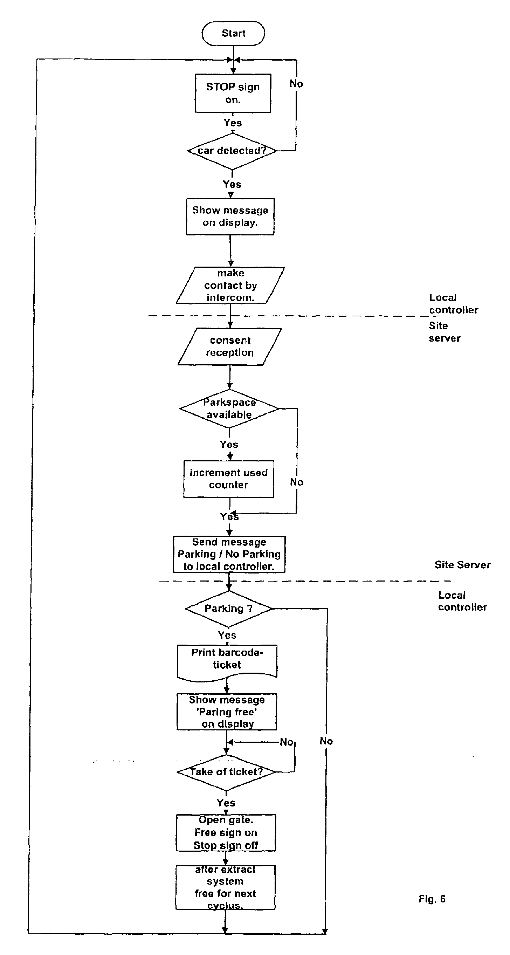

- Fig. 6: shows a flowchart of the handling entrance building complex visitor/service;

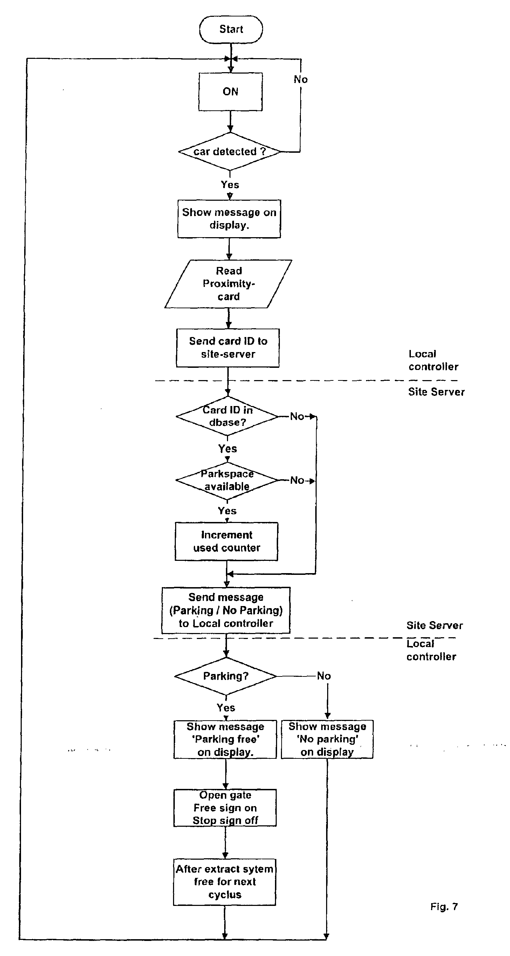

- Fig. 7: shows a flowchart of the handling entrance building complex personnel;
- Fig. 8: shows a data report for the admission control and parking management system according to the invention;
- Fig. 9: shows an overview or scheme of the different databases of the admission control and parking management system according to the invention; and
- Fig. 10: shows a scheme of the necessary hardware components of the admission control and parking management system according to a preferred embodiment of the invention.

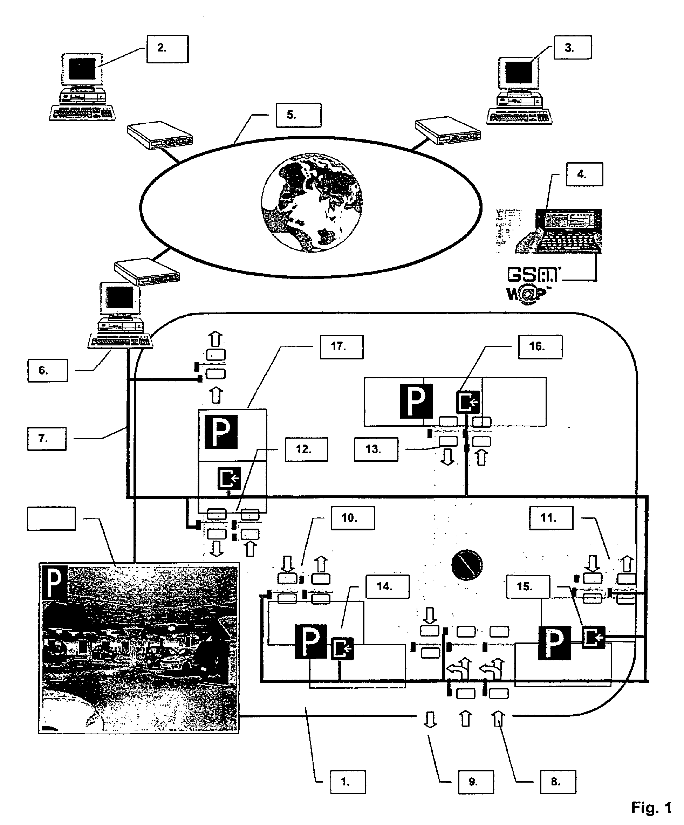

Figure 1 shows a rough overview according to a preferred embodiment of the invention of the admission control and parking management system 1. Mentioned system mainly consists of a workstation/centre 2, a workstation building manager 3, a mobile net 4, an internet 5 and a parking management server 6 coupled hardware to hardware with a bus system 7. At the entrance with accessories 8 and the exit with accessories 9 and the coupling through to the entrances and exits of the parking spaces 10, 11, 12, 13 with the building entrances 14, 15, 16, 17 respectively. Further a detailed picture of the parking garage 18.

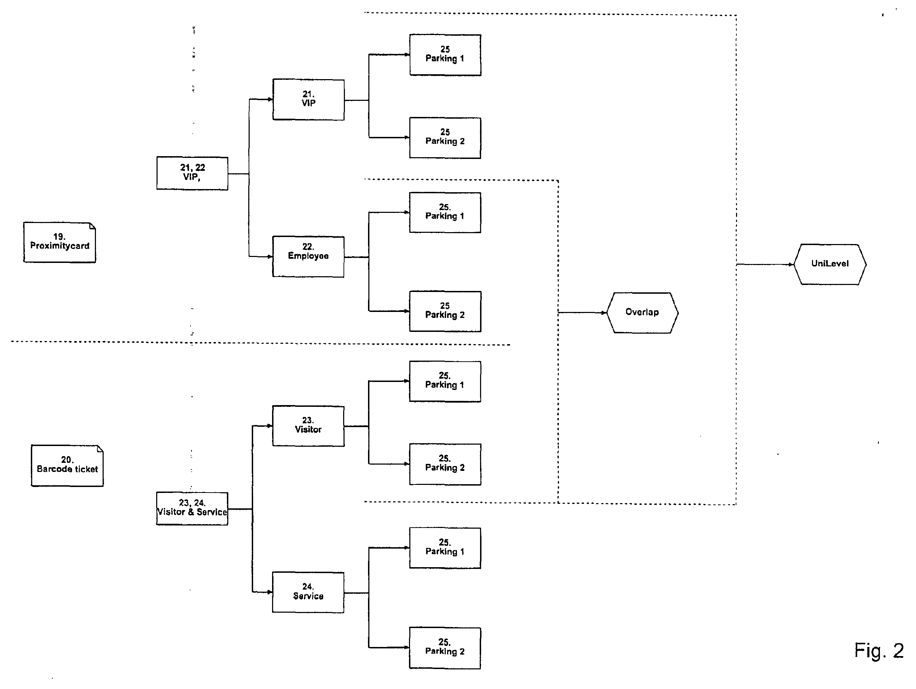

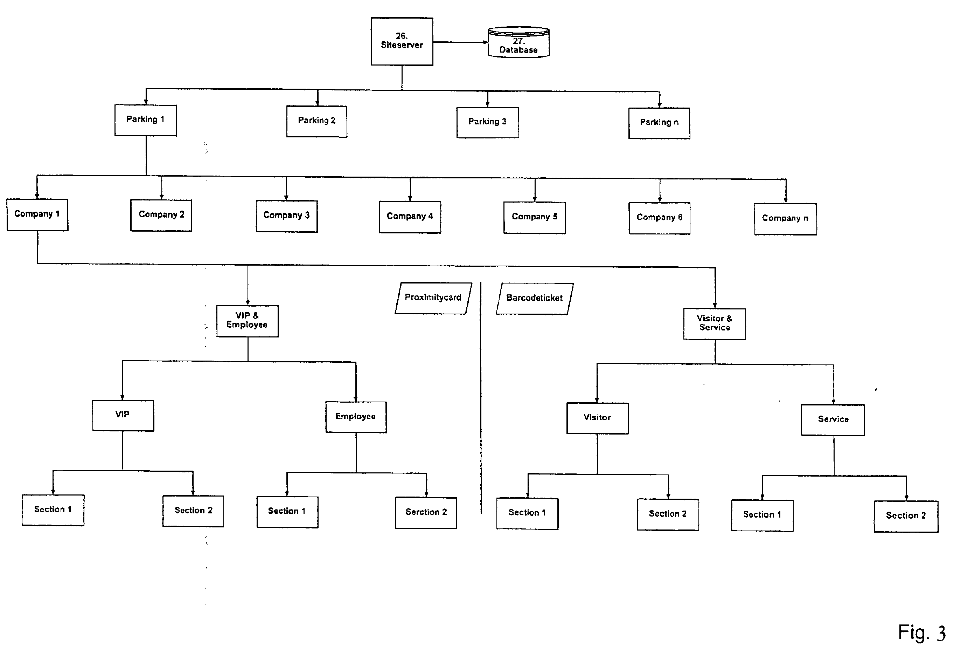

Figures 2 and 3 show block diagrams for the use of the entrance cards 19, 20 for employers 21, 22 and visitors and services 23, 24 to the different parking spaces or car parks 25, which are all controlled by the site server 26 coupled to the database 27.

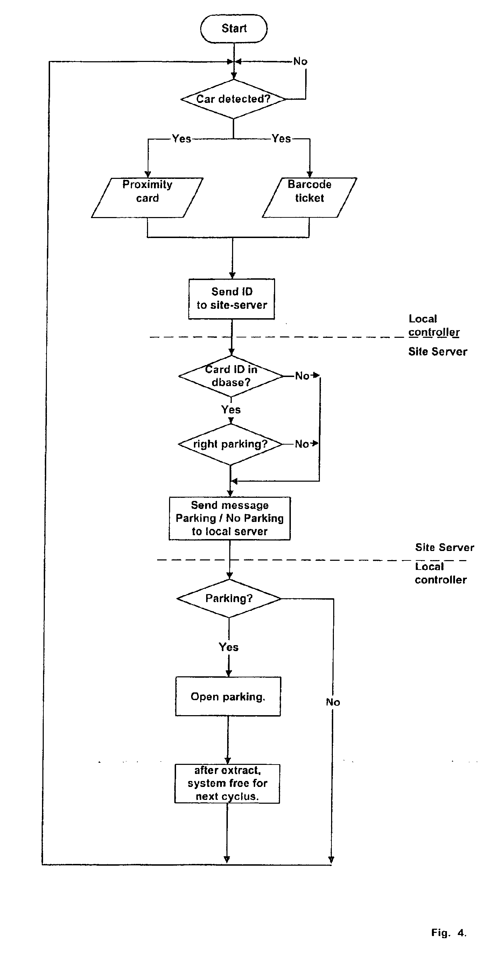

Figures 4 up to 7 show flowcharts for the handling at the entrance of the parking 28, handling at the exit of the parking 29, handling of the entrance complex visitor/service 30 and handling entrance complex personnel 31.

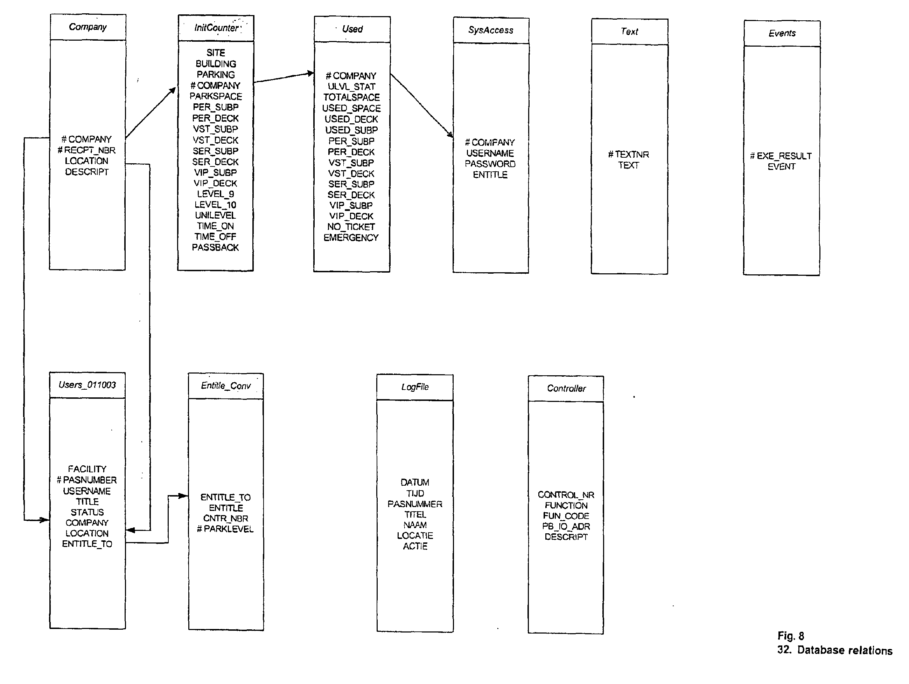

Figure 8 shows a data report 32, representing database relations of the schedule information, in which everything can be indicated in detail.

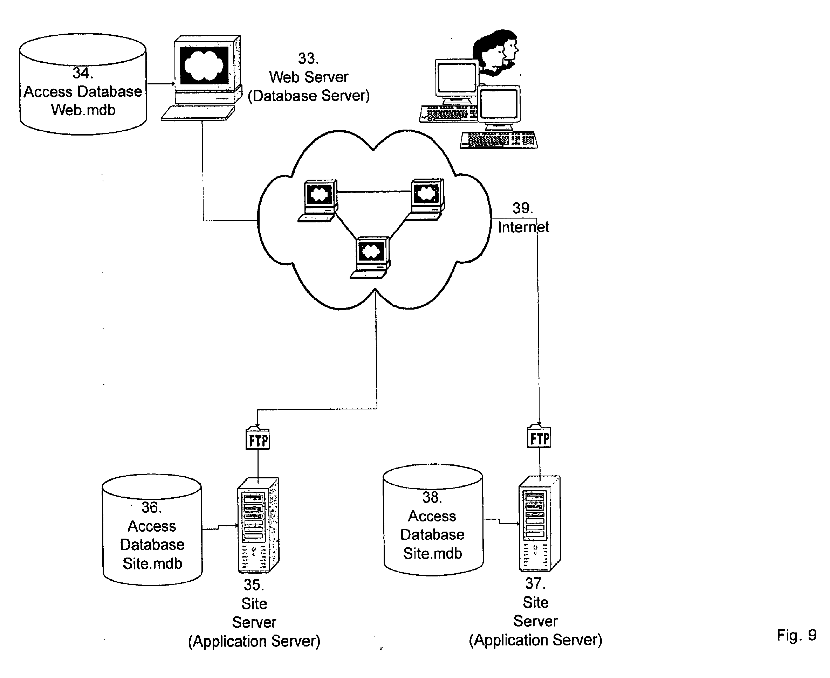

Figure 9 shows the mutual couplings of the different servers, such as the web server 33 with access database with web.mdb 34, a first site server 35 with access database site.mdb 36 and a second site server 37 with access database site.mdb 38. As indicated, everything is coupled via or by means of the internet 39.

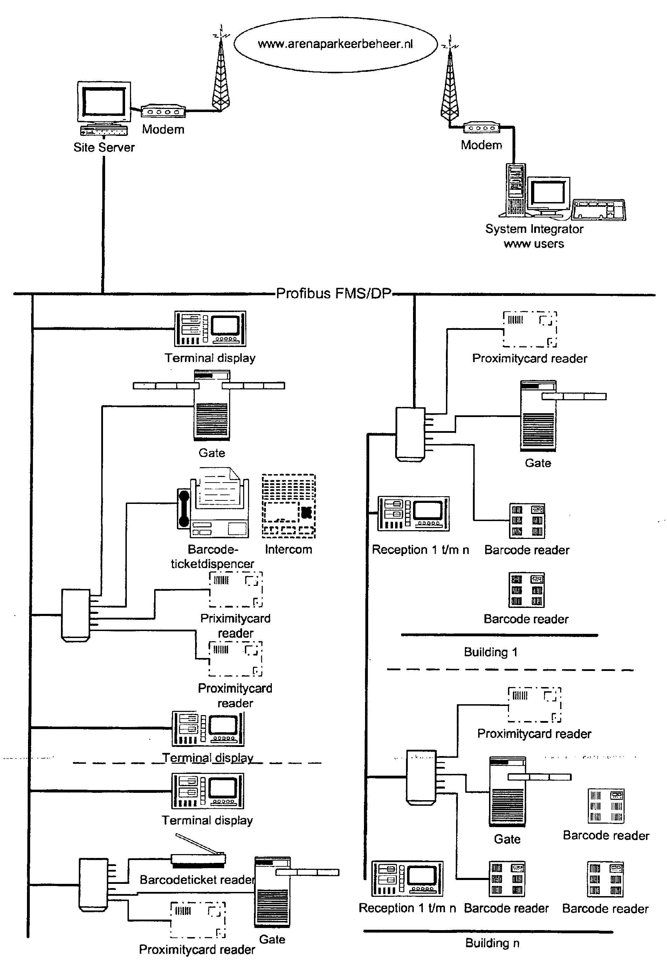

Figure 10 shows a scheme of the several necessary hardware components of the admission control and parking management system according to a preferred embodiment of the invention.

For reasons of clarity, several parts are named directly and therefore are not indicated with numbers.

Finally it has to be emphasized, that the above description constitutes a preferred embodiment of the device according to the invention consisting of an admission control and parking management system and that further variations and modifications are still possible without departing the scope of this patent document.

## Claims

1. Device constructed as a hardware and software system for flexible management of admission controls and parking spaces of a marked out building complex, which can contain several companies and/or residences with several parking spaces, in which each employee, (visitor) or resident can have several parking spaces, in which the mentioned parking spaces and/or car parks are mostly meant for private cars, vans and such, **characterized in that**, the mentioned flexible controlling and managing of the admission to the mentioned building complex with separated parking spaces is executed via a software system coupled to a web server (35) with a website on the internet (39) and is in short indicated as admission control and parking management system (1) and which works completely autonomous, in which the mentioned local admission to the building complex is equipped with a pillar and barrier gate provided with registration equipment coupled to the mentioned software system for identification of the person with vehicle, in which it usually concerns personnel or employees and visitors, in which the management of the parking spaces and building admission is very specific and selective, in which mentioned personnel or employees identify themselves via an admission control card with chip or called a proximity-card (19) and visitors can take a barcode ticket (20) from the pillar after announcement for a once-only admission to a specifically appointed parking space (10, 11, 12, 13) and building floor (14, 15, 16, 17), in which after working hours and/or visit the persons with their vehicles check-out via proximity-card (19) or barcode ticket (20) at the exit with pillar and barrier gate provided with check-out equipment, in which all settings for the admission policy and mutations during use is done by software via the internet (39) web server (33), in which information from the web server (33) for the concerned management system can be downloaded constantly to a local set up site server (35) for locally, meaning decentralized, visualizing the last state of affairs of the system, in which dimensions and capacity of the hardware and software of the mentioned admission control and parking management system is adjustable to the dimensions of and the required possibilities for simultaneously controlling and managing several building complexes.

2. Device as claimed in claim 1, **characterized in that**, the mentioned website on the internet (39) contains an active page with a central database with all the information of the building complexes and that the mentioned website on the internet (39) is accessible via http://namecomplex.parkeerbeheer.nl with a password to which certain privileges are coupled.

3. Device as claimed in claims 1 and 2, **characterized in that**, in the concerned building complex the parking management server (6) is connected by means of a bus system (7) to several check-in and check-out equipment at entrances and exits (8, 9).

4. Device as claimed in aforementioned claims, **characterized in that**, every building complex can have several car park or parking spaces (11, 12, 13, 14), which in turn can be used by several institutes or companies, in which each institute or company can divide the (rented) spaces to them available into levels, in which all users can manage their own available parking spaces via an internet site and can assign or take away users' rights.

5. Device as claimed in claim 1, **characterized in that**, the mentioned admission control system can be coupled to a burglar- or fire alarm system, which system can be coupled to an emergency centre, in which the parking management system is not integrated in the admission control system and in which accordingly both systems have its own database in which i.d. information and users' rights are stored.

6. Device as claimed in claim 1, **characterized in that**, the complex manager is responsible for the admission control and parking management system (1) and can control these systems via internet (39).

7. Device as claimed in claim 1, **characterized in that**, the mentioned parking management system updates the number of occupied and free parking spaces and the immediate mutations and further the system updates all actions and events in a so called "logfile" which logfile can be consulted from the internet to analyse the present use of the installation.

8. Device as claimed in claim 1, **characterized in that**, the mentioned group of employees is divided in employees without parking rights, which have a proximity-card adjusted only for the admission control system of the specific building, employees with parking rights, which have a proximity-card (19) up to the, by their company reserved number of parking spaces in a determined car park, when the number of reserved spaces are not occupied, VIP's, in which this category has fixed parking spaces and always have admission and these spaces cannot be used by others, visitors, which normally have no admission and can only get this by identifying themselves to one of the companies via the intercom at the visitors entrance, regular services, which visit the complex regularly, for example postmen, the refuse collection service and such, this group receives an admission pass from the building manager, incidental services, which visit the building complex without any regularity, such as courier services, suppliers and such and will be seen by the system as brief visitors without parking rights with admission to the complex with a pre-set time limit (for example 15 minutes), emergency services such as the fire brigade, ambulance, which in case of calamities must have fast admission to the complex, and identify themselves via the intercom or drive open the barrier gates, in which every reception has an emergency button for opening all barrier gates of all entrances and exits of the complex to which that reception belongs, building manager, which authority is responsible for the daily management of the parking installation, in which this authority is always available for the users of the installation and can be taken over after office hours by a service department.

9. Device as claimed in claim 1, **characterized in that**, by choosing operation via the internet (39) via a standard web browser an employee, through users' identification and password can get access to the information applicable to him or her and can change, remove or add the following information:
- pass number
- name of pass holder
- parking type (level)
- free classification of the number of reserved parking spaces over the different levels,
in which the manager can also assign buildings to companies, can adjust the quantity of rented parking spaces per company, can add, remove, adjust companies and such, in which the data is kept on a web server (33), in which once every pre-set time the data is automatically downloaded to the site server (35, 37) (for example at 12.00 and 00.00 hrs.)

10. Device as claimed in claim 9, **characterized in that**, the web server (33) has the following characteristics:
- The web server can be used for managing 10.000 passes for 200 companies. These companies can be spread over several locations (Multi Site).
- Mutations on the web server are periodically downloaded to the site server.
- Synchronisation with the web server can be done every hour.
- The web server and the site server are protected by a username and password.
- Several companies can log in on the web server at the same time.
- The complex manager has the authority to mutate not only the passes, but also the number of parking spaces per company.
- The username and password are first being stored by ISADIN in order to guarantee a good protection. A list with usernames and passwords are put at the complex managers disposal.

11. Device as claimed in claims 9 and 10, **characterized in that**, the site server (35, 37) has the following characteristics:
- per local parking management system 2000 passes divided over 25 companies can be applied.
- Per company 10 levels of admission groups can be adjusted.
- Per company one can choose for parking on all levels from a certain hour.
- Per site one can choose for Anti-passback or nightly reset.
- Admission control is done by means of an HID RS232 reader, barcode system or intercom.
- In case of a bus failure or breakdown of the site server the system switches over to the "stand alone" mode. In this position all passes with a valid facility code have access. Visitors can receive a service barcode card by pressing the service button at the intercom.
- The system offers potential free contacts for: roller almost empty, failure, emergency exit and such.
- On the Site server log data is kept of pass usage (who, where, when, access, no access + reason), the use of the emergency button (who, when) and the status of the system. The manager of the web server can request these data.

12. Device as claimed in aforementioned claims, **characterized in that**, immediately after implementation of the system an instruction course can be given to several users.
